# EUROPÄISCHE PATENTSCHRIFT

(11) **EP 0 638 358 B1**
(45) Veröffentlichungstag und Bekanntmachung des Hinweises auf die Patenterteilung: **03.05.2000**
(21) Anmeldenummer: 93810536.8
(22) Anmeldetag: 26.07.1993
(51) Int. Cl.: B01J 19/32, B01J 10/00, B01F 5/06

(54) **Wirbelpackung für Stoffaustauschkolonnen und statische Mischer**
Vortex packing for mass exchange columns and for static mixers
Matériau de garnissage tourbillonnaire destiné aux colonnes d'échange de masse et aux mélangeurs statiques

(43) Veröffentlichungstag der Anmeldung: 15.02.1995
(73) Patentinhaber: Sulzer Chemtech AG, CH-8404 Winterthur (CH)
(72) Erfinder: Süess, Philipp, CH-8413 Neftenbach (CH)
(74) Vertreter: Heubeck, Bernhard

(56) Entgegenhaltungen:
- WO-A-86/06296
- WO-A-90/10497
- FR-A- 2 406 151

## Beschreibung

Die Erfindung betrifft eine Wirbelpackung für einen als Stoffaustauschkolonne oder statischen Mischer ausgebildeten Apparat gemäss Oberbegriff von Anspruch 1. Die Erfindung bezieht sich auch auf Verwendungen einer derartigen Wirbelpackung.

Die Wirbelpackung ist eine geordnete Packung mit einer ventilatorartigen Anordnung von Leitflächen, die die Strömungsmedien aus ihrer Hauptströmungsrichtung nach allen Seiten auslenken und benachbarte Teilströme miteinander vermischen. Die Leitflächen sind die Strukturelemente der Packung. Den Gitterebenen, die in Apparatquerschnitten liegen, entsprechen zwei verschiedenen Lagen von Oktaedern. In der einen Lage sind die Oktaederseiten alternierend offen bzw. geschlossen, während in der anderen Lage die Oktaeder alles offene Seiten aufweisen. Die Lagen sind ineinander derart verzahnt, dass die Oktaeder benachbarter Lagen der gleichen Sorte sich in ihren Polspitzen treffen. Die Oktaeder füllen den Raum nur zu zwei Drittel aus; die Zwischenräume bestehen aus Tetraedern.

Die Gesamtheit der Lagen mit den Oktaedern, die alternierend offene bzw. geschlossene Seitenflächen haben, bildet ein Teilsystem, für das folgendes gilt: Durch den in einem Apparatquerschnitt liegenden äquatorialen Umfang wird ein Oktaeder in zwei Pyramiden unterteilt, deren Seiten zur Hälfte offen bzw. geschlossen sind. Die geschlossenen Flächen stossen nur in der Spitze (Pol) zusammen. Geschlossenen Pyramidenseiten über dem Grundraster eines Apparatequerschnitts stossen nie an einer Grundseite zusammen. Geschlossene Seiten zweier sich in den Spitzen oder Polen berührenden Pyramiden spannen keine gemeinsame Ebene auf; hingegen liegen geschlossene Seiten zweier sich in der Basislinie (= äquatorialer Umfang) berührenden Pyramiden in einer gemeinsamen Ebene und bilden somit ein ebenes viereckiges Flächenstück.

Aus der WO_90/10497 (= P.6332) ist eine gattungsgemässe Packung bekannt. Diese bekannte Packung lässt sich aus Schichten von zickzackförmig gefalteten Blechen, sogenannten plissierten Matten, aufbauen. Die Schichten sind parallel zur Richtung der Apparatachse, während die Faltkanten zur Achse geneigt sind; die Schichten sind alternierend derart angeordnet, dass ein System von Kanälen, die sich offen kreuzen, vorliegt. Die ungefalteten Bleche weisen ein schachbrettähnliches Muster auf, mit im wesentlichen rautenförmigen Feldern, deren eine Hälfte in Form von Durchbrüchen ausgebildet ist. Die andere Hälfte der Felder bildet die Strukturelemente der Packung; sie sind in den Eckpunkten durch Überlappungen der geschlossenen Felder miteinander verbunden, sodass die offenen, flächenmässig etwas kleineren Felder als inselartige Öffnungen vorliegen. Durch diese Öffnungen ergibt sich in der Packung ein zweites System von sich offen kreuzenden Kanälen, das zum ersten System senkrecht steht. Die Faltkanten verlaufen - in Richtung der Überlappungen - entlang eines Teils der Felderrändern.

Bei der bekannten Packung ist es vorgesehen, die rautenförmigen Durchbrüche beispielsweise durch Ausstanzen aus einem Blech herzustellen. Dabei geht allerdings beinahe die Hälfte des Materials verloren. Es ist Aufgabe der Erfindung, mit möglichst wenig Verlust an Material die bekannte Wirbelpackung herzustellen. Eine Lösung zu dieser Aufgabe ergibt sich durch die im Anspruch 1 genannten kennzeichnenden Merkmale. Es gelingt nämlich durch geeignetes Teilausstanzen von Elementarbereichen, die im wesentlichen dreieckig sind, sowie durch Umklappen dieser Elementardreiecke um eine Faltkante, einerseits die benötigten Durchbrüche zu schaffen und andererseits Teile von Strukturelementen der Packung zu formen. Durch die Gesamtheit der Elementardreiecke, die ausklappt oder in der Grundfläche belassen sind, lässt sich die bekannte Wirbelstruktur zusammensetzen, ohne dass es dabei zu einem Verlust an Material kommt.

Die abhängigen Ansprüche 2 bis 7 betreffen verschiedene Ausführungsformen der erfindungsgemässen Wirbelpackung. Die unabhängigen Ansprüche 8 bis 10 beziehen sich auf deren Verwendung.

Die Erfindung wird nachfolgend anhand der Zeichnungen erläutert. Es zeigen:
- Fig. 1: einen Ausschnitt aus einer bekannten Wirbelpackung,
- Fig.2a,b: zwei Flächen mit rautenförmigen Feldern, die nach Zickzack-Kantung die Struktur der Fig.1 ergeben,
- Fig. 3: eine Elementarzelle eines Punktegitters,
- Fig. 4: eine Hilfsfigur zur Veranschaulichung eines kubisch-flächenzentrierten Gitters,
- Fig. 5: einen Ausschnitt aus einer Grundfläche der erfindungsgemässen Wirbelpackung für eine erste Ausführungsform,
- Fig. 6: einen der Fig.5 entsprechenden Ausschnitt für eine zweite Ausführungsform,
- Fig. 7: einen der Fig.5 entsprechenden Ausschnitt für eine dritte Ausführungsform,
- Fig. 8: den Ausschnitt der Fig.5 mit ausgeklappten Elementardreiecken,
- Fig. 9: eine realisierbare Ausführung von ausklappbaren Elementardreiecken,
- Fig. 10: einen Längsschnitt durch die erfindungsgemässe Wirbelpackung, erste Ausführungsform, wobei lediglich die Lage der Grundflächen dargestellt ist,
- Fig. 11: einen der Fig.10 entsprechenden Längsschnitt für die zweite Ausführungsform,
- Fig. 12: einen der Fig.10 entsprechenden Längsschnitt für die dritte Ausführungsform,
- Fig. 13: Muster der Anordnung der Elementardreiecke für die erste Ausführungsform,
- Fig. 14: Muster der Anordnung der Elementardreiecke für die zweiten Ausführungsform,
- Fig. 15: Muster der Anordnung der Elementardreiecke für die dritten Ausführungsform,
- Fig. 16: Elementardreiecke einer Variante der ersten Ausführungsform und
- Fig. 17: Querschnitt durch die Grundfläche dieser Variante.

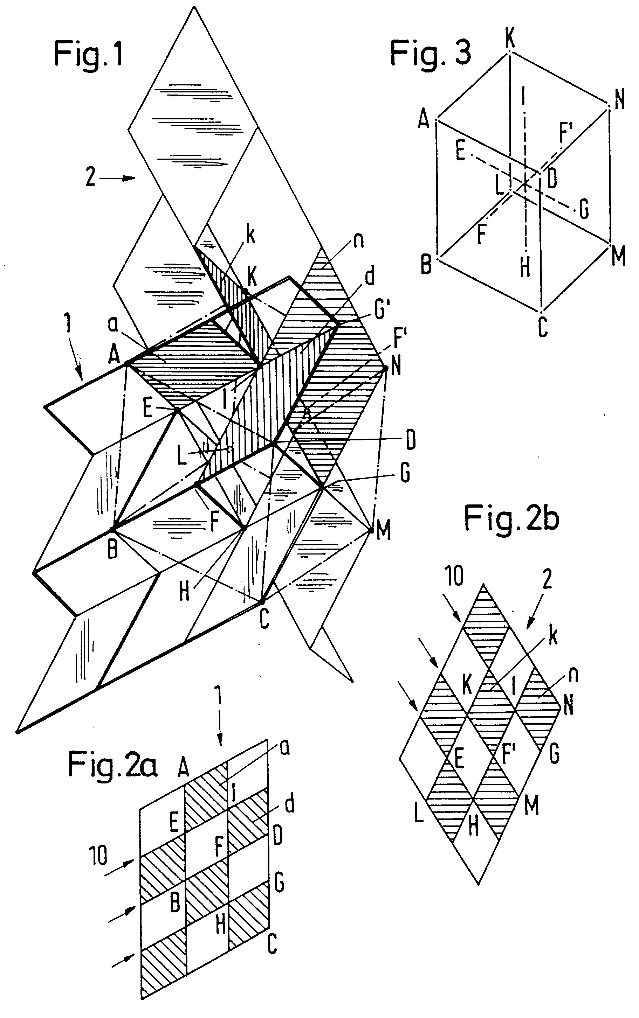

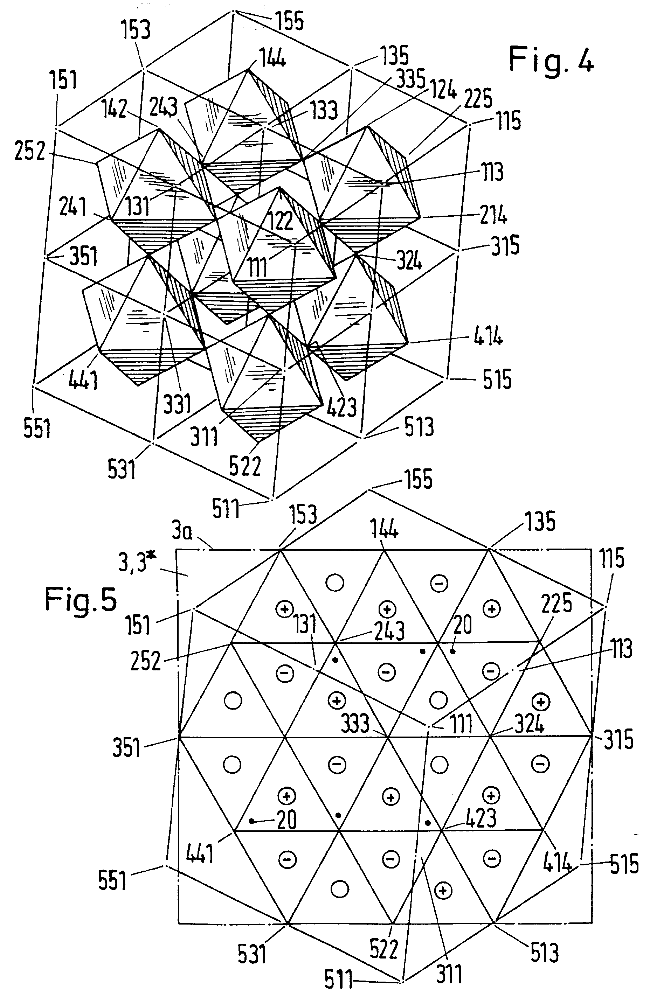

Das der gattungsgemässen Wirbelpackung zugeordneten Punktegitter ist in dem Sonderfall, dass die Strukturelemente Rhomben mit einem spitzen Winkel von 60° sind, ein kubisch-flächenzentriertes Gitter. Dies ist in Fig.1 gezeigt: die Einheitszelle des Gitters ist der Kubus mit den Eckpunkten A, B, C, D, K, L, M sowie N und mit den Flächenmittelpunkten E, F, G, H, I sowie F' (siehe auch Fig.3 mit einem in Richtung A-B gestreckten Kubus). Der dargestellte Packungsausschnitt setzt sich aus zwei zickzackartig gekanteten, mit rhombenförmigen Durchbrüchen versehenen Flächen 1 und 2 zusammen, die in ihrem ungekanteten Zustand in den Figuren 2a und 2b abgebildet sind. Die schraffiert gezeichneten Flächen (beispielsweise a und d) sind die geschlossenen Flächen; die übrigen Flächen stellen die Durchbrüche dar. Die Pfeile 10 geben Richtung und Lage der Faltkanten an. Zur praktischen Realisierung der in Fig.1 dargestellten Struktur ist es - wie bereits erwähnt - nötig, dass die geschlossenen Rautenflächen an ihren Ecken durch Überlappungen verbunden sind (siehe Fig.4 der WO 90/10497). Hier und auch im folgenden wird der Einfachheit halber die Verbindung zwischen den Strukturelementen als punktartige Verbindung dargestellt.

In Fig.1 sind die Flächen a, d, n und k durch Schraffierung besonders hervorgehoben: Sie bilden eine ventilatorartige Anordnung von Leitflächen (Hauptströmungsrichtung ist H-I). Das durch die Flächenmittelpunkte E, ... F' gegebene Oktaeder - es ist ein reguläres Oktaeder - gehört zur Sorte mit lauter offenen Seitenflächen. Zwischen den beiden Flächen d und n liegt ein zur Hälfte gezeigtes Oktaeder der anderen Sorte (alternierend offene und geschlossene Seitenflächen); die Eckpunkte dieser Hälfte sind I, D, G, N und G'.

Die Zeichnungen, anhand derer nachfolgend die erfindungsgemässe Strukturen beschrieben werden, illustrieren den kubisch-flächenzentrierten Sonderfall. Es gilt aber auch die Verallgemeinerung, dass die Einheitszelle A, ... N nicht kubisch sondern ein beliebiges Parallelepiped ist, beispielsweise ein Quader, wie er in Fig.3 dargestellt ist (die Kante AB ist länger als die Kanten BC und AK).

Die Fig.4 dient einerseits zur Veranschaulichung des kubisch-flächenzentrierten Gitters und andererseits zur Einführung von Bezugszeichen für die Gitterpunkte. Gezeigt ist ein aus acht Einheitszellen bestehender, würfelförmiger Ausschnitt des Gitters. Die durch die Flächenmittelpunkte der Einheitszellen aufgespannten Oktaeder sind als undurchsichtige Körper dargestellt. Den Punkten werden dreistellige Zahlen zugeordnet, die in ersichtlicher Weise mit den Koordinaten der Punkte zusammenhängen. Der dem Betrachter nächstliegende Gitterpunkt trägt die Nummer 111. Der im Gitterausschnitt zum Punkt 111 diametral liegende Punkt, der nicht sichtbar ist, hat die Nummer 555. Der Mittelpunkt des Gitterausschnitts ist vom Oktaeder unterhalb des Punktes 122 verdeckt; er weist die Nummer 333 auf. Es ist für das Interpretieren der Figuren 5 bis 8 vorteilhaft, wenn im Sinne einer Orientierungshilfe jeweils auf die Fig.4 Bezug genommen wird.

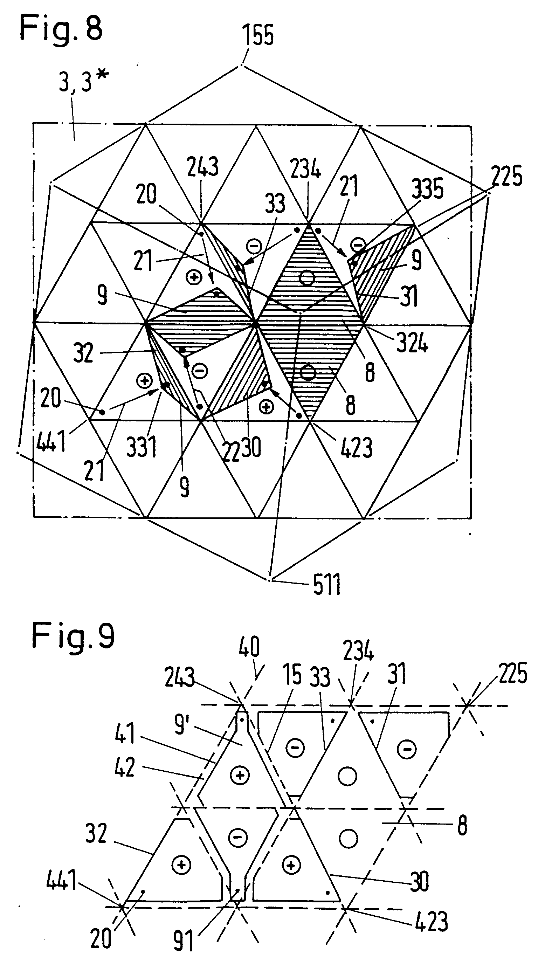

Fig.5 zeigt den durch den grossen Kubus mit den Eckpunkten 111 bis 555 gegebenen Ausschnitt aus einer Gitterebene 3*` die durch den räumlichen Mittelpunkt 333 und durch die Kantenmittelpunkte 135, 315 usw verläuft. Dieser sechseckige Ausschnitt gliedert sich in 24 gleichseitige Dreiecke, die nachstehend "Elementardreiecke" genannt werden. Die strichpunktierte Linie 3a stellt den Rand einer rechteckigen Erweiterung des sechseckigen Ausschnitts dar. Die erste erfindungsgemässe Ausführungsform der Wirbelpackung ergibt sich durch eine Schar paralleler Grundflächen, die sich bezüglich der Gitterebene 3* beschreiben lassen: Die Grundfläche 3 gliedert sich entsprechend der Gitterebene 3* in Elementardreiecke, die teils in der Grundfläche 3 belassen und teils aus der Grundfläche 3 ausgeklappt werden. Jedem Elementardreieck in Fig.5 ist ein kleiner Kreis zugeordnet, der angibt, ob - Kreis mit Pluszeichen - das Elementardreieck nach vorne geklappt wird oder - Kreis mit Minuszeichen - nach hinten geklappt wird oder - leerer Kreis - in der Grundfläche 3 bleibt. Für die im Mittelfeld liegenden acht Elementardreiecke ist durch Punkte 20 die Spitze gekennzeichnet, die ausgeklappt wird. Fig.8 veranschaulicht das Ausklappen der Elementardreiecke 9; die Pfeile 21 deuten die Richtung der Ausklappung an. Beispielsweise wird die Spitze beim Punkt 441 zum Punkt 331 nach vorn geklappt; oder die Spitze beim Punkt 234 wird zum Punkt 335 nach hinten geklappt. Die Elementardreiecke 8 bleiben in der Gitterebene 3*.

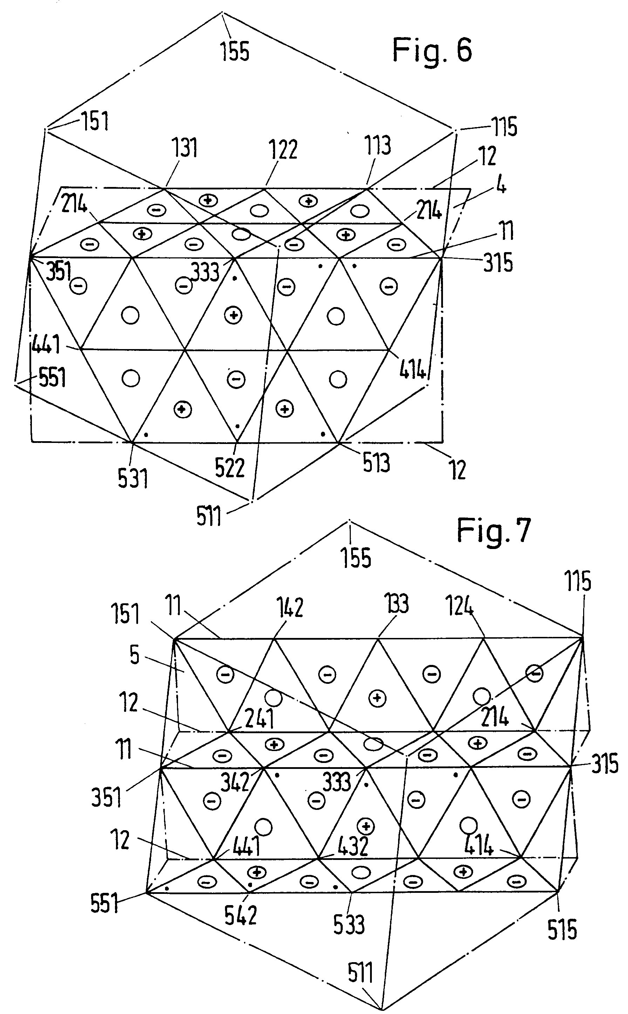

Die Grundfläche 4 der zweiten Ausführungsform, Fig.6, ist plissiert, d.h. zickzackartig gefaltet. Der grosse Kubus 111, ... 555 kann so gelegt werden, dass die eine Faltkante 11 auf die Gerade durch die Punkte 351 und 315 zu liegen kommt, während die benachbarten Faltkanten 12 durch die Punkte 131 und 113 bzw. 531 und 513 gehen. Für die acht Elementardreiecke in der Raute mit den Eckpunkten 333, 315, 513 und 531 ist wieder analog zur Fig.5 angegeben, ob und wie die Dreiecke ausgeklappt werden. Fig.7 zeigt die plissierte Grundfläche 5 der dritten Ausführungsform. Aufgrund der Beschreibungen der Figuren 4 bis 6 kann auf eine Erläuterung der Fig.7 verzichtet werden.

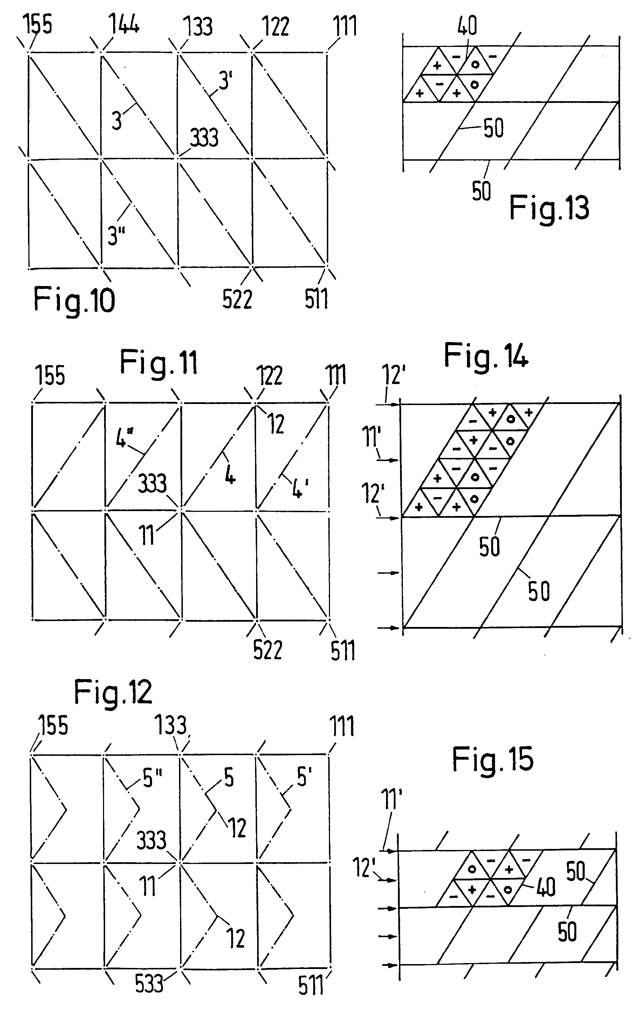

Die Figuren 10 bis 12 zeigen jeweils anhand eines Diagonalschnittes durch den grossen Kubus 111, ... 555 die Schar der Grundflächen, wobei lediglich deren Lage strichpunktiert angegeben ist. Die ebene Grundfläche 3 der in Fig.5 dargestellten ersten Ausführungsform hat die unmittelbaren Nachbarn 3' und 3''. Entsprechendes gilt für die plissierten Ausführungsformen mit den Grundflächen 4, 4', 4'' (Fig.11) bzw. 5, 5', 5'' (Fig.12).

Die Figuren 13 bis 15 zeigen die periodischen Muster der drei Ausführungsformen. Dabei beziehen sich die Bezugszeichen 40 auf die Grenzen der Elementardreiecke und die Bezugszeichen 50 auf die Grenzen der periodisch wiederkehrenden Gruppen (nachstehend kurz "periodische Gruppe" genannt). Die in der Fig.5 eingeführten Plus- und Minuszeichen sind hier der Einfachheit halber ohne umschliessende Kreise angegeben. Die Pfeile 11' und 12' zeigen auf die Lagen der Faltkanten 11 bzw. 12.

Beim Zusammensetzen der Wirbelpackung sind benachbarte Grundflächen zueinander derart versetzt anzuordnen, dass beispielsweise die mit leerem Kreis gekennzeichneten Elementardreiecke um eine Dreiecksseite nach rechts oder links verrückt zu liegen kommen, wobei die verrückende Bewegung in Richtung der Diagonale zwischen den Punkten 115 und 151 vorgenommen werden muss. Aufgrund dieser versetzten Anordnung lassen sich die ausgeklappten Elementardreiecke benachbarter Grundflächen paarweise verbinden. Es besteht eine Zuordnung zwischen den Kanten 30 und 31 und eine Zuordnung zwischen den Kanten 32 und 33, wobei beispielsweise durch die Paarung der Kanten 30 und 31 eine Verbindung zwischen den Grundflächen 3'' und 3 (vgl. Fig.10) herstellbar ist, während durch die Paarung der Kanten 32 und 33 eine Verbindung zwischen den Grundflächen 3 und 3' herstellbar ist. Entsprechendes gilt für die zwei anderen Ausführungsformen. Es besteht allerdings ein Unterschied: Bei der dritten Ausführungsform werden pro periodische Gruppe zwei Elementardreiecke derselben Grundfläche miteinander verbunden (beispielsweise in Fig.7 die beiden Dreiecke mit den Eckpunkten 333, 342 und 432 bzw. 432, 543 und 533).

In Fig.9 ist für die erste Ausführungsform (entsprechend Fig.8) eine periodische Gruppe gezeigt, die praktisch realisierbar ist. Die ausklappbaren Elementardreiecke 9' weichen etwas von der Idealform ab, die durch die strichpunktiert gezeichneten Grenzlinien 40 gegeben sind. Zwischen den Schnittkanten 41 der Dreiecke 9' und den Linien 40 sind schmale Streifen 41 vorgesehen, die in der Grundfläche 3 bleiben und dieser die nötige Stabilität geben. Auf den Grenzlinien 40 liegen die Faltkanten 15, um die die Elementardreiecke 9' umgeklappt werden. Die einen der Dreiecke 9' weisen an der ausgeklappten Spitze eine rechteckartige Ausformung 91 auf. Diese Ausformung 91 ermöglicht eine lineare (nicht punktuelle) Verbindung oder Berührung mit den benachbarten Grundflächen 3' und 3''.

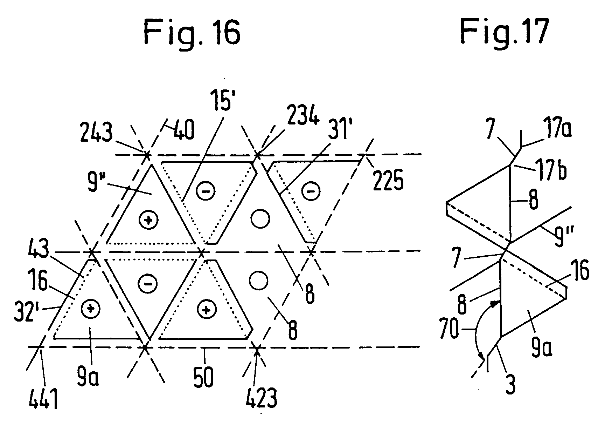

Fig.16 zeigt die periodische Gruppe für eine Variante der ersten Ausführungsform in der praktischen Realisierung. Hier weichen die Elementardreiecke 9'' etwas weniger von der idealen Dreiecksform ab. Die Faltkanten 15' sind punktiert gezeichnet. Die einen der Elementardreiecke, nämliche die Dreiecke 9a, weisen einen seitlichen Streifen 43 auf, der um die Faltkante 16 etwas gegen die Dreiecksfläche umgeklappt ist. Fig.17 stellt einen Querschnitt durch die Grundfläche 3 längs der Verbindungslinie zwischen den Punkten 234 und 423 dar. Die Grundfläche 3 ist an den Stellen 7 mittels Paaren von Faltkanten 17a und 17b leicht plissiert. Der Plissierwinkel 70 ist grösser als rund 145° und der Abstand der Plissierkanten 17a und 17b beträgt rund 10 bis 20 % der Seitenlänge eines Elementardreiecks 9. Die Plissierkanten begrenzen jeweils Streifen von linear angeordneten Elementardreiecken 9.

Es lassen sich auch Mischformen der drei regelmässigen Grundformen (gemäss den Figuren 10, 11 und 12 bzw. Ansprüchen 5, 6 und 7) konstruieren. In einem Extremfall wäre es möglich, pro Schicht der Wirbelpackung lediglich eine Faltkante 11 vorzusehen, wobei offensichtlich alle Faltkanten in einer gemeinsamen Ebene lägen. (Anspruch 4 mit nur einer Faltkante entspricht diesem Extremfall.)

Das folienartige Material, aus dem die erfindungsgemässe Wirbelpackung hergestellt ist, kann metallisch sein oder aus einem Kunststoff bestehen. Es kann eine Oberflächenstrukturierung, beispielsweise eine feine Rillierung, aufweisen. Ausserdem kann es mit Löchern perforiert sein, deren Durchmesser wesentlich kleiner als die Seitenlängen der Elementardreiecke sind. Die Schnittkanten der ausgeklappten Elementardreiecke können glatt oder aber auch gezahnt sein.

Für die Verbindungen zwischen den Elementardreiecken kommen Punktschweissungen (Laser-, Mikroplasma- oder Widerstandsschweissung) in Frage. Die Verbindungen können aber auch mit mechanischen Mitteln, beispielsweise mit Nieten, hergestellt werden.

Für die erfindungsgemässe Wirbelpackung stehen verschiedene Verwendungsmöglichkeiten offen: Verwendung in einer Kolonne für einen Stoffaustausch und/oder Wärmeaustausch zwischen einem Rieselfilm und einem Gasstrom, wobei zwecks gleichmässiger Benetzung eine horizontale Rillierung der Strukturelemente vorgesehen ist. Verwendung in einem Reaktor, in dem die Packung als Träger für einen Katalysator ausgebildet ist. Oder Verwendung in einem statischen Mischer für fluide Medien.

## Patentansprüche

1. Wirbelpackung für einen als Stoffaustauschkolonne oder statischen Mischer ausgebildeten Apparat, mit parallelogrammförmigen Strukturelementen (a, d, k, n), die ein Punktegitter definieren, dessen in Apparatquerschnitten liegenden Gitterebenen Grundraster aus Vierecken bilden, wobei diese Vierecke jeweils einen äquatorialen Umfang eines Oktaeders darstellen, die Polspitzen dieser Oktaeder auf den Punkten der benachbarten Gitterebenen liegen und die Oktaeder entweder alles offene Seiten oder alternierend offene und geschlossene Seiten aufweisen, wobei ferner die Packung aus folienartigem Material aufgebaut ist, das Schichten bildet und Grundflächen (3; 4; 5) aufspannt, die hexagonal gerastert in dreieckige Elementarbereiche (8, 9) unterteilbar sind,
dadurch gekennzeichnet, dass ein Teil der Elementardreiecke (9) jeweils an zwei Seiten Schnittkanten (30) aufweisen sowie lappenartig um eine dritte Seite, insbesondere um eine Faltkante (15), aus der Grundfläche ausgeklappt sind, dass die Strukturelemente (a, d, k, n) der Packung durch paarweise Zuordnung bzw. Verbindung von Elementardreiecken (8, 9) gebildet sind und dass ferner keine parallelogrammförmigen Durchbrüche in den Grundflächen durch Entfernen von Material erzeugt sind.

2. Wirbelpackung nach Anspruch 1, dadurch gekennzeichnet, dass das folienartige Material eine Grundfläche (3) der ausgeklappten Elementardreiecke (9) bildet, welche im wesentlichen mit einer Gitterebene (3*) zusammenfällt.

3. Wirbelpackung nach Anspruch 1, dadurch gekennzeichnet, dass die Grundfläche (3) eine leichte Plissierung aufgrund von Paaren von Plissierkanten (17a, 17b) aufweist, wobei der Abstand der Plissierkanten rund 10 bis 20 % der Seitenlänge eines Elementardreiecks (8) beträgt, der Plissierwinkel (70) grösser als rund 145° ist und die Plissierkanten jeweils Streifen von linear angeordneten Elementardreicken begrenzen.

4. Wirbelpackung nach Anspruch 1, dadurch gekennzeichnet, dass das folienartige Material eine Grundfläche (4) der ausgefalteten Elementardreiecke (9) bildet, welche mindestens eine Faltkante (11) aufweist, durch die ein Wechsel der Grundfläche (4) von einer Gitterebene, auf der die Grundfläche im wesentlichen liegt, zu einer zweiten Gitterebene erfolgt.

5. Wirbelpackung nach Anspruch 4, dadurch gekennzeichnet, dass die Grundfläche (4) eine gleichmässige zickzackförmig Plissierung aufweist, wobei die Faltkanten (11) jeweils Streifen begrenzen, die zwei parallele Bänder mit linear angeordneten Elementardreiecken umfassen.

6. Wirbelpackung nach Anspruch 4, dadurch gekennzeichnet, dass die Grundfläche (5) eine gleichmässig zickzackförmige Plissierung aufweist, wobei die Faltkanten (11, 12) jeweils Streifen von linear angeordneten Elementardreiecken begrenzen.

7. Wirbelpackung nach einem der Ansprüche 1 bis 6, dadurch gekennzeichnet, dass das folienartige Material metallisch ist oder aus einem Kunststoff besteht.

8. Verwendung einer Wirbelpackung nach einem der Ansprüche 1 bis 7 in einer Kolonne für einen Stoffaustausch und/oder Wärmeaustausch zwischen einem Rieselfilm und einem Gasstrom, wobei zwecks gleichmässiger Benetzung eine horizontale Rillierung der Strukturelemente vorgesehen ist.

9. Verwendung einer Wirbelpackung nach einem der Ansprüche 1 bis 7, in einem Reaktor, in dem die Packung als Träger für einen Katalysator ausgebildet ist.

10. Verwendung einer Wirbelpackung nach einem der Ansprüche 1 bis 7, in einem statischen Mischer für fluide Medien.

## Claims

1. A vortex packing for an apparatus constructed as a mass exchange column or static mixer, having structural elements (a, d, k, h) shaped as parallelograms, which define a point lattice whose lattice planes that lie in cross sections of the apparatus form basic patterns of quadrilaterals, wherein these quadrilaterals each represent an equatorial circumference of an octahedron, the pole tips of these octahedrons lie on the points of the adjacent lattice planes and the octahedrons have either all open sides or alternately open and closed sides, wherein moreover the packing is constructed from foil-like material, which forms layers and sets bases (3; 4; 5) which can be divided in a hexagonal pattern into triangular elementary regions (8, 9), **characterised in that** a part of the elementary triangles (9) have cutting edges (30) at each of the two sides and also are folded out like tabs from the base around a third side, in particular around a fold edge (15),
**in that** the structural elements (a, d, k, n) of the packing are formed by paired association or connection of elementary triangles (8, 9),
**and in that** moreover no openings shaped as parallelograms are produced in the bases by removal of material.

2. A vortex packing according to Claim 1,
**characterised in that** the foil-type material forms a base (3) of the fold-out triangles (9) which substantially coincides with a lattice plane (3*).

3. A vortex packing according to Claim 1,
**characterised in that** the base (3) comprises a slight pleating by virtue of pairs of pleated edges (17a, 17b), the spacing of the pleated edges being roughly 10 to 20 % of the side length of an elementary triangle (8), the pleating angle (70) being greater than roughly 145° and the pleated edges each bordering strips of linearly disposed elementary triangles.

4. A vortex packing according to Claim 1,
**characterised in that** the foil-type material forms a base (4) of the folded-out elementary triangles (9), which base comprises at least one fold edge (11) by which a change of the base (4) from one lattice plane, on which the base substantially lies, to a second lattice plane occurs.

5. A vortex packing according to Claim 4,
**characterised in that** the base (4) has uniform zig-zag pleating, the fold edges (11) in each case bordering strips which comprise two parallel bands with linearly disposed elementary triangles.

6. A vortex packing according to Claim 4,
**characterised in that** the base (5) has uniformly zig-zag pleating, the fold edges (11, 12) each bordering strips of linearly disposed elementary triangles.

7. A vortex packing according to one of Claims 1 to 6,
**characterised in that** the foil-type material is metallic or is made from a plastic material.

8. Use of a vortex packing according to one of Claims 1 to 7 in a column for mass exchange and/or heat exchange between a trickling film and a gas stream, whereby for the purpose of uniform wetting a horizontal channelling of the structural elements is provided.

9. Use of a vortex packing according to one of Claims 1 to 7 in a reactor in which the packing is constructed as a substrate for a catalyst.

10. Use of a vortex packing according to one of Claims 1 to 7 in a static mixer for fluid media.

## Revendications

1. Matériau de garnissage tourbillonnaire pour un appareil configuré en colonne de transfert de matière du mélangeur statique, avec des éléments de structure en forme de parallélogramme (a, d, k, n) qui définissent un réseau de points dont les plans du réseau se trouvant dans les sections transversales de l'appareil forment une grille de base de quadrilatères, et ces quadrilatères représentent à chaque fois un périmètre équatorial d'un octaèdre, les pointes des pôles de cet octaèdre se trouve sur les points des plans de réseau voisin et les octaèdres présentent soit tous des côtés ouverts ou des côtés ouvert et fermé alternant, et de plus le garnissage est construit d'un matériau en feuille, qui forme des couches et couvre des surfaces de base (3 ; 4 ; 5) qui peuvent être subdivisées en trames hexagonales en zones élémentaires triangulaires (8, 9),
caractérisé en ce qu'une partie des triangles élémentaires (9) présentent à chaque fois sur deux côtés, des arêtes de coupe (30) et sont déployable à la manière d'une lèvre autour d'un troisième côté, en particulier autour d'une arête de pliage (15), à partir de la surface de base, en ce que les éléments de structure (a, d, k, n) du garnissage sont formés par affectation par paire ou respectivement liaison de triangles élémentaires (8, 9) et en ce que, de plus, il n'y aucune interruption en forme de parallélogramme qui est produite dans le surfaces de base par élimination de matérière.

2. Matériau de garnissage tourbillonnaire selon la revendication 1, caractérisé en ce que le matériau en forme de feuille forme une surface de base (3) des triangles élémentaires déployés (9), qui correspond essentiellement à un plan du réseau (3*).

3. Matériau de garnissage tourbillonnaire selon la revendication 1, caractérisé en ce que la surface de base (3) présente un léger plissage en raison de paires de arêtes plissées (17a, 17b), et la distance des arêtes plissés représente environ 10 à 20 % de la longueur des côtés d'un triangle élémentaire (8), l'angle de plissage (70) est plus grand qu'environ 145° et les arêtes de plissage délimitent à chaque fois des raies des triangles élémentaires agencés linéairement.

4. Matériau de garnissage tourbillonnaire selon la revendication 1, caractérisé en ce que le matériau en forme de feuille forme une surface de base (4) des triangles élémentaires (9) déployés qui présente au moins une arête de pliage (11), par laquelle se produit un changement de la surface de base (4) d'un plan en réseau, sur lequel repose essentiellement la surface de base, à un second plan en réseau.

5. Matériau de garnissage tourbillonnaire selon la revendication 4, caractérisé en ce que la surface de base (4) présente un plissage régulier en zig-zag et les arêtes de pliage (11) délimitent à chaque fois des raies qui contiennent deux bandes parallèles avec des triangles élémentaires agencés linéairement.

6. Matériau de garnissage tourbillonnaire selon la revendication 4, caractérisé en ce que la surface de base (5) présente un plissage régulier en zig-zag et les arêtes de pliage (11, 12) délimitent à chaque fois des raies de triangles élémentaires agencées linéairement.

7. Matériau de garnissage tourbillonnaire selon l'une des revendications 1 à 6, caractérisé en ce que le matériau en feuille est métallique ou se compose d'une matière synthétique.

8. Utilisation d'un matériau de garnissage tourbillonnaire selon l'une des revendications 1 à 7, dans une colonne pour un transfert de matière et/ou un échange de chaleur entre un film ruisselant et un courant de gaz où, en vue d'une imprégnation régulière, un rainurage horizontal des éléments de structure est prévu.

9. Utilisation d'un matériau de garnissage tourbillonnaire selon l'une des revendications 1 à 7 dans un réacteur dans lequel le garnissage est configuré comme un support pour un catalyseur.

10. Utilisation d'un matériau de garnissage tourbillonnaire selon l'une des revendications 1 à 7 dans un mélangeur statique pour des milieux fluides.
